# EUROPEAN PATENT APPLICATION

(11) **EP 3 961 544 A1**
(43) Date of publication of application: **02.03.2022**
(21) Application number: 20795405.8
(22) Date of filing: 20.04.2020
(51) Int. Cl.: G06Q 30/06, G06Q 50/14

(54) **TRAVEL SERVICE**

(30) Priority: 24.04.2019 JP 2019083419
(71) Applicant: Peace Tec Lab Inc., Tokyo 150-0002 (JP)
(72) Inventor: MURAMOTO Rieko, Shibuyaku, Tokyo 1500002 (JP)
(74) Representative: Forstmeyer, Dietmar
(86) International application number: PCT/JP2020/017098
(87) International publication number: WO 2020/218261

(57) **Abstract**

The present invention relates to the method for reducing a burden on a traveler in trip reservation. Specifically, a travel system is provided, which is capable of preparing clothes, a home appliance, a cosmetic, etc. for a traveler at a trip destination as necessary without the need for bringing these items to reduce luggage. A travel management system is provided, which is operated by a program for executing a travel system application. The program executes the step of inputting traveler schedule information, rental product and/or consumables request information, and use schedule information, the step of transmitting the information to a management server via the Internet, the step of storing the schedule information, the request information, and the use schedule information in the management server, the step of producing and storing available rental product and/or consumables information in the management server, and the step of displaying the stored available information.

## Description

### TECHNICAL FIELD

The present invention relates to the method for reducing a burden on a traveler in trip reservation. Specifically, the present invention relates to a travel system capable of preparing clothes, a home appliance, a cosmetic, etc. for a traveler at a trip destination as necessary without the need for bringing these items to reduce luggage.

### BACKGROUND ART

With recent development of transportation, there has been a service for reducing a luggage burden on a traveler (Patent Literature 1: JP-A-2005-289634 (Narita International Airport Corporation)). With popularization of the Internet, a user or a travel agent can make a detailed arrangement for trip contents according to one's preference (Patent Literature 2: JP-A-2018-505467) (Expedia Inc.)).

### CITATION LIST

### PATENT LITERATURE

PATENT LITERATURE 1: JP-A-2005-289634
PATENT LITERATURE 2: JP-A-2018-505467

### SUMMARY OF INVENTION

### PROBLEMS TO BE SOLVED BY INVENTION

However, there are a wide variety of trip purposes including sightseeing, businesses, etc. for a short to long stay period. In the case of overseas, local information is limited, and for this reason, preparation of the minimum possible luggage provides a burden on a traveler. Further, an unfamiliar amenity at a hotel as a place to stay might provide stress on the traveler. In some cases, a limitation on daily exercise or body care during a trip also causes an issue for the traveler.

The present invention has been made in view of the above-described problems, and one object of the present invention is to reduce luggage to be brought to a place to stay as much as possible considering, e.g., traveler's trip purpose and schedule.

Specifically, in a long-term trip to overseas, there is a concern about many clothes, cosmetics, etc. to be brought. Moreover, in some cases, the traveler is not familiar with local culture and custom at a place to which the traveler first visit, and for this reason, does not know what kind of clothes the traveler should wear. Even if searching is performed in advance, there might be extremely-limited information depending on a location. Time and effort to sort and select the clothes by the traveler oneself according to the trip purpose provide stress on the traveler in some cases.

Another object of the present invention is to provide a stay period comfortable for the traveler. As described above, proper clothes can be selected or provided according to the culture at the place to stay and the trip purpose, and therefore, a traveler's discomfort feeling due to clothes improper to the occasion is avoided. Normally, an amenity at an accommodation facility is used at a trip destination, but the difference of the amenity from a daily-used item might provide stress on the traveler. In some cases, the traveler wishes to use a daily-used cosmetic or personal care product even at the trip destination, and for fulfilling such a wish, the traveler oneself needs to bring such an item. In a case where the traveler does exercise on a daily basis, the traveler needs to bring a tool to the trip destination or procure the tool on the spot.

Still another object of the present invention is to reduce a burden on the traveler in the case of a trip to regions with multiple different weathers. The trip to the regions with the different weathers inevitably results in an increase in the type of clothes. By the system of the present invention, the traveler can prepare, in every movement, for use of proper clothes or accessory on the spot before movement.

Still another object of the present invention is to make a rental arrangement for different fields, such as a clothes rental arrangement, a home appliance rental arrangement, a cosmetic rental arrangement, and an audio-visual product and/or information communication equipment rental arrangement, at once. Depending on the place to stay, a facility as the place to stay can make an arrangement for rental of clothes or leisure goods. However, very little facility can handle a cosmetic and other amenity products. It takes time and effort to check these items and make a rental arrangement as necessary by the traveler oneself.

Still another object of the present invention is to reduce the luggage. According to the present invention, e.g., the probability of the luggage being mixed up at an airport or being mistakenly delivered can be reduced. No time to pick up the luggage at the airport is also necessary.

Still another object of the present invention is to activate a local economy by local production for local consumption. The traveler procures a product to be rented from a local store or manufacturer without bringing one's own luggage, and therefore, there is a probability that consumption at the place to stay increases.

### SOLUTIONS TO PROBLEMS

For solving the above-described problems, the invention of the present application provides a program for executing a travel system application in a traveler client terminal. The program executes the step of inputting traveler schedule information, rental product and/or consumables request information, and rental product and/or consumables use schedule information, the step of transmitting the information to a management server via the Internet, the step of storing the schedule information, the request information, and the use schedule information in the management server, the step of producing available rental product and/or consumables information indicated by the transmitted request information based on the stored request information and the stored use schedule information and storing the available rental product and/or consumables information in the management server, the step of displaying the stored available information, and the step of receiving purchase information indicating purchase of a rental product and/or consumables indicated by the stored request information in the management server after the rental product and/or the consumables are consumed and/or used.

Further, in the present invention, the program is provided, which executes the step of collecting position information by a GPS function to execute the displaying step in a language linking the position information.

Further, in the present invention, the program is provided, which executes the step of producing rental product return information to transmit the rental product return information to the management server and store the rental product return information in the management server.

Furthermore, in the present invention, the program is provided, which further executes a step of storing, as history information in the management server, information on any one or combination of the schedule information, the rental product and/or consumables request information, the use schedule information, position information collected using a GPS function, and rental product return information.

Further, in the present invention, the program is provided, which invokes the history information to transmit the history information as new travel rental information to the management server and execute the travel system application.

Furthermore, in the present invention, a travel management system for reserving a rental product and/or consumables and providing the rental product and/or the consumables to a traveler is provided, the system including: a traveler client terminal including a travel system application executed by the above program; a client terminal of a coordinating facility; and a management server, wherein the client terminal owned by the coordinating facility includes a coordinate application for implementing a section configured to invoke and display traveler schedule information, rental product and/or consumables request information, and use schedule information transmitted to the management server by the traveler, a section configured to transmit available rental product and/or consumables information to the management server, a section configured to transmit, to the management server, information on reception of a rental-ended product from the traveler, and a section configured to input and update rental product management information.

Still further, in the present invention, the travel management system is provided, wherein
the rental product and/or the consumables are any one or more or combination of clothes, shoes, bags, a fashion accessory, a home appliance, a cosmetic, a hair and beauty home appliance, hair and beauty equipment, fitness equipment, baby goods, leisure goods, audio-video equipment, information communication equipment, indoor entertainment goods, food, and etc.

Furthermore, in the present invention, the travel management system is provided, wherein the management server includes a database having a user information storage configured to manage traveler attribute information, a schedule information storage configured to manage a traveler's trip schedule, a product information storage configured to store product information, which is transmitted from the traveler client terminal, regarding the rental product and/or the consumables to be consumed and/or used, an order information storage configured to store the purchase information transmitted from the traveler, and a product collection information storage configured to store product collection information in the coordinating facility.

Furthermore, in the present invention, the travel management system is provided, wherein
the management server further includes a product selection acceptance section configured to share, with the travel system arrangement application, product information selected by the travel system application and a product rental processing section configured to share, with the travel system use application, product collection information in the coordinating facility.

Furthermore, in the present invention, the travel management system is provided, the system further including: a providing facility configured to provide the traveler with the rental product and/or the consumables collected, by the coordinating facility, for the traveler and return the product and/or the consumables to the coordinating facility after use by the traveler.

Furthermore, in the present invention, the travel management system is provided, wherein the coordinating facility and the providing facility are an identical facility.

Furthermore, in the present invention, the travel management system is provided, wherein the database further includes a history storage configured to further store an information history stored in the order information storage, and the management server further includes a preference analysis section configured to analyze a traveler's preference based on the information in the history storage.

Furthermore, in the present invention, the travel management system, wherein the traveler is able to delete and add a selected product as needed.

Furthermore, in the present invention, the travel management system is provided, the travel management system further including: a section configured to invalidate an operation of deleting and adding a product by the traveler based on the information from the schedule information storage.

Furthermore, in the present invention, the travel management system is provided, wherein the travel system application is available in a trip reservation site, a hotel reservation site, or a rent car reservation site.

### EFFECTS OF INVENTION

According to the present invention, the luggage of the traveler can be reduced in amount. Specifically, the necessity of bringing clothes and a cosmetic can be eliminated. Moreover, the types and amount of clothes can be easily arranged considering the trip purpose and the local culture and custom. Thus, the time and effort to prepare for the trip by the traveler can be reduced.

Moreover, according to the present invention, a comfortable stay period can be provided to the traveler. Proper clothes can be selected or provided according to the culture at the place to stay and the trip purpose, and therefore, the traveler's discomfort feeling due to the clothes improper to the occasion can be avoided. Moreover, the daily-used cosmetic or personal care product can be used even at the trip destination. For even a traveler for which it is important to bring such an item due to a health reason, a comfortable trip can be provided by the invention of the present application. Further, in a case where the traveler does exercise on a daily basis, such exercise is allowed as usual.

Further, according to the present invention, a rental arrangement for different fields such as a clothes rental arrangement, a home appliance rental arrangement, and a personal care product rental arrangement can be made at once. According to the system of the present invention, an entire picture in whether or not an object intended by the traveler oneself can be used at the trip destination can be grasped by the traveler.

In addition, according to the present invention, the probability of the luggage being mixed up at the airport or being mistakenly delivered can be reduced. No time to pick up the luggage at the airport is also necessary.

Moreover, according to the present invention, a coordinator procures the rental /consumables on the spot, and therefore, the local economy can be activated by local production for local consumption.

### BRIEF DESCRIPTION OF DRAWINGS

Fig. 1 is a schematic diagram showing an outline configuration example of information communication environment of one embodiment according to the present invention.
Fig. 2 is a schematic diagram showing a flow until pick-up of a rental product etc. in one embodiment according to the present invention.
Fig. 3 is a schematic diagram showing a flow until return of the rental product in one embodiment according to the present invention.
Fig. 4 is a configuration diagram of a management server of a travel system according to the present invention.
Fig. 5 is a block diagram showing one embodiment of an outline configuration of a travel management system according to the present invention.
Fig. 6 is a flowchart showing an operation example in user registration in the travel management system of the present invention.
Fig. 7 is a schematic view showing one example of a user registration form displayed on a client terminal of a traveler of Fig. 1.
Fig. 8 is a flowchart showing an operation example in reservation of the rental product etc. in the travel management system of the present invention.
Fig. 9 is a schematic view showing one example of a product request form displayed on the client terminal of the traveler of Fig. 1.
Fig. 10 is a schematic view showing one example of the product request form displayed on the client terminal of the traveler of Fig. 1.
Fig. 11 is a flowchart showing an operation example in confirmation of reservation of the rental product and/or consumables by a management server 88;
Fig. 12 is a schematic view showing one example of the form of a reservation list produced by a coordinating facility and displayed on the client terminal of the traveler.
Fig. 13 is a flowchart showing another operation example in reservation of the rental product etc. in the travel management system of the present invention.
Fig. 14 is a flowchart showing an operation example in return of the rental product in the travel management system of the present invention.
Fig. 15 is a conceptual diagram showing various use forms of the present invention.

### DESCRIPTION OF EMBODIMENTS

Hereinafter, embodiments of the present invention will be described with reference to the drawings. Note that the embodiments described below are merely examples and do not intended to exclude various modifications and technology applications not described below. That is, various modifications (e.g., combinations of the embodiments) can be made to the present invention without departing from the gist of the present invention. Moreover, in description below, the same or similar reference numerals are used to represent the same or similar elements.

A travel system according to the present invention is intended to be used by a traveler. By operation by the traveler, information can be shared with a coordinating facility and a product and/or consumables selected as those that the traveler wishes to use during one's trip can be collected and can be picked up by the traveler via a providing facility as necessary. The traveler can operate a travel system application downloaded to one's own terminal to obtain and use an intended product at a trip destination. As necessary, the traveler can purchase, via the application of the present invention, the intended product while using the product at the trip destination or after the end of the trip. A purchase form can be selected as necessary. The product may be taken out on the spot, or may be mailed later. Such information is available by management of the product with, e.g., an IC tag. After use, a rental product is returned to the coordinating facility via the providing facility. The coordinating facility manages the rental-ended product, such as cleaning.

In the present invention, the "traveler" means a person who travels. A purpose for traveling is not important in the present invention. Sightseeing, businesses, etc. are assumed as main purposes, but a visit to a relative or a friend, an attendance at a ceremony, etc., i.e., a case where the traveler spends a certain time at a location other than a residence, are within the scope of the "trip" in the present invention. For example, a one-day trip is also included within the scope of the purpose in the present invention. Moreover, a person continuously traveling from one country to another is also the "traveler" in the present invention. The system of the present invention is extremely effective to reduce a burden on travelers traveling for a long period of time, traveling from one country to another, and traveling frequently.

In the present invention, the "rental product" means an object to be temporarily used by the traveler at the trip destination. The rental product includes not only clothes matching a local weather but also a product matching a dress code in the case of an attendance at an event at a restaurant, a party, or a ceremony with the dress code. Further, the rental product includes a local traditional dress etc. In the invention of the present application, the rental product includes not only clothes but also a bag, shoes, and other accessories coordinated with these clothes. These products can be selected by the traveler oneself, or can be selected by the coordinating facility familiar with local information. The traveler registers one's preference with one's attribute data, so that a product close to one's preference can be obtained. In the present invention, the traveler can operate the application according to the present invention later to obtain a purchased product (e.g., a sales product) according to information registered as the rental product.

The above-described "rental product" also includes an appliance used on a daily basis. For example, as long as a product database includes a daily familiar product such as a dryer, a facial care device, a facial massager, and a massager, the traveler can select and use such a product on the spot. Alternatively, the traveler can specify and use a product marketed on the spot. Moreover, the above-described "rental product" includes a cooking utensil and a food ingredient. A traveler with a limitation on food due to an allergy or a religious reason can select and cook a food ingredient by the traveler oneself. The "rental product" of the invention of the present application may also include a combination of multiple different types of products such as the examples described above. This can be achieved by use of the program and system of the invention of the present application.

In the present invention, the "consumables" mean those consumed at the trip destination by the traveler or those which cannot be reused. Examples thereof include a cosmetic, a toothbrush, and tissue paper. In a case where food can be specified, the consumables also include food. This is advantageous in a case where food is limited due to an allergy or a case where local water does not agree with the traveler, for example. Moreover, it is also advantageous in a case where the traveler needs to select a food ingredient on the spot due to a traveler's own health care or a religious reason. By the system or application of the invention of the present application, the coordinating facility can collect the rental product and the consumables to provide the rental product and the consumables to the traveler.

Other specific examples of the rental product and/or the consumables provided in the present invention will be described below, but the invention of the present application is not limited to these examples: clothes, shoes, bags, a fashion accessory, a home appliance, a cosmetic, a hair and beauty home appliance, hair and beauty equipment, fitness equipment, baby goods, leisure goods, audio-video equipment, information communication equipment, indoor entertainment goods, food, a tourist book, a resort dress, a hair dryer, a Kariyushi shirt, a curling iron, a wedding dress, a tuxedo, a bouquet, a floral ornament, a tiara, a name board, a snorkel, a bath towel, an underwater camera, a waterproof bag, a swimming wear, a foldable chair, a blanket, a champagne bottle, a champagne glass, a basket, a catering meal, a facial care device, a steamer, a face pack, a nail set, Jenga, a board game, a playing card, a video communication game, video communication game software, a digital camera, and a drone.

In the present invention, the "travel system application" is executed by the program of the present invention capable of unifying management of the above-described rental product or consumables by the traveler. This program can execute the step of inputting traveler schedule information, rental product and/or consumables request information, and use schedule information, the step of transmitting such information to a management server via the Internet, the step of storing the schedule information, the request information, and the schedule information in the management server, the step of producing available rental product and/or consumables information to store such information in the server, and the step of displaying the stored available rental product and/or consumables information.

In the present invention, the rental product and/or consumables request information is, by a product selection acceptance section, sorted and stored in a rental product request information storage and a consumables request information storage via an information input section. In this case, when the traveler wishes to purchase the rental product, rental product information stored in the rental product request information storage is, according to the present invention, stored in a sales product storage by the product selection acceptance section and is stored as a sales product in a use history information storage by a product sales processing section. Alternatively, in the present invention, after the traveler has finished one's trip, the application of the invention of the present application is launched from a client terminal, so that a product can be selected and purchased while the traveler is viewing a trip history. In this case, a new product can be purchased, and actually-used goods can be obtained by transmission of the history information to the coordinating facility.

In the present invention, the "traveler schedule information" means information including trip location and date, transportation, an activity on the spot, a product pick-up location, and a rental product return location. Such information is stored in a schedule information storage. The "rental product and/or consumables request information" is information regarding a series of products selected according to the "traveler schedule information" by the traveler. For example, in a case where the trip purpose is an overseas wedding, a wedding dress or bouquet can be reserved at the day of a wedding ceremony. In this case, the dress or the bouquet can be picked up at a location where the ceremony is to be held, and after use, can be returned to such a location. By use of the application of the present invention, the catering meal of the day can be also reserved at the day of the ceremony and can be prepared at a ceremony hall. In the present invention, the "traveler schedule information" and the "rental product and/or consumables request information" as described above can be combined to generate the "use schedule information." Specifically, such information is information saved in a state in which the product used at the time and the place (or a product to be used) links the schedule information including the date. That is, the information includes information regarding a pick-up or return location and a pick-up or return method linking the product, and can be shared with the coordinating facility. Such information is produced and transmitted by the application of the client terminal, and in a case where the information links the product, may be stored in the rental product request information storage and/or the consumables request information storage. The "use schedule information" of the present invention is an information bundle, and therefore, the same trip schedule and a product with the same specifications can be invoked from the schedule information or the product information and an application therefor can be made. In the case of a group trip, such information can be shared among terminals including the travel system use application of the present invention.

In the present invention, the "available rental product and/or consumables information" is information indicating whether or not the rental product and/or the consumables sent to the management server via the Internet by operation of the travel system application of the present invention by the traveler is available. Specifically, such information may be the list of products collected by the coordinating facility based on the "rental product and/or consumables request information" or the "use schedule information" of the traveler received from the management server. In a case where a product request from the traveler cannot be met (a product is not available), a corresponding portion of the list is blank or is provided with no link.

In the present invention, the above-described "available rental product and/or consumables information" can be displayed on the client terminal of the traveler by operation by the traveler. Regarding such displaying, position information and language information can be linked each other by a position information reading section such as a GPS on the client terminal, and the information can be displayed in a suitable language. A language displaying function can be implemented by a translation engine on the management server via the Internet, or can be implemented by use of an application which can cooperate with the application of the present invention on the client terminal. The GPS and the language can be linked each other in such a manner that a section configured to read country information from a map application is included in the application of the invention of the present application.

In the present invention, the "coordinating facility" means a facility actually collecting the rental product and the consumables based on the product request information from the traveler. The coordinating facility may be a person managing the management server. Moreover, the coordinating facility may include multiple facilities. For example, a single coordinating facility is responsible for procurement of clothes, and other coordinating facilities are responsible for food and a personal care product. Thus, the products can be provided to the same traveler. In the present invention, a facility providing a product may be separately prepared, or the coordinating facility may also serve as the providing facility. For example, an accommodation facility can serve as the coordinating facility and the providing facility.

In the present invention, a "coordinate application" is an application mainly for validating the function of the coordinating facility. Such an application functions to support, on a coordinator side, the travel system application of the invention of the present application, and implements a section configured to display the traveler schedule information, the rental product and/or consumables request information, and the use schedule information transmitted to the management server by the traveler, a section configured to input the available rental product and/or consumables information and transmit such information to the management server, a section configured to input information regarding reception of the rental-ended product from the traveler, and a section configured to input and update rental product management information. The "section configured to display the traveler schedule information, the rental product and/or consumables request information, and the use schedule information transmitted to the management server by the traveler" is displayed for the purpose of sharing the information input by the traveler. By the "section configured to input information regarding reception of the rental-ended product from the traveler" and the "section configured to input and update rental product management information," the rental product for the traveler can be managed.

In the present invention, the traveler returns the rental product to the providing facility or the coordinating facility after the rental product is used by the traveler. Maintenance of the returned rental product is performed at a facility having the ownership of the rental product or a facility managing the rental product, and as necessary, inventory registration is performed and the rental product is rented to a next traveler.

In the present invention, the providing facility or the coordinating facility also functions as a rental product return facility. The traveler brings and returns the rental product to the providing facility or the coordinating facility. In the present invention, the traveler does not necessarily bring the rental product, and can leave the rental product with an IC tag being attached to the rental product. For example, the traveler can leave rented clothes in a room of a hotel as a place to stay. The traveler can leave the clothes in a room of the providing facility which is a hotel as a place to stay. The IC tag is attached to the rental product according to the present invention, so that, e.g., the hotel as the place to stay can read this tag to perform the processing of returning the rental product.

In the present invention, the rental product may be managed by an IC tag system. The rental product is managed by the IC tag system so that the product management information in the coordinating facility can be updated.

In the present invention, the "management server" means a server including a section and a database for implementing the travel system of the present invention. Such a server may be a cloud server or a server provided at the coordinating facility or the place to stay.

In the present invention, the traveler can purchase the rental product during use thereof. In the present invention, before the traveler returns the rental product to the providing facility or the coordinating facility, the traveler launches the application in the client terminal to invoke the rented product displayed on a user interface and transmit purchase information. Accordingly, the rental product information stored in the rental product request information storage is, according to the present invention, stored in the sales product storage by the product selection acceptance section, and as the sales product, is stored in the use history information storage by the product sales processing section. This may be implemented by a relational database in the management server.

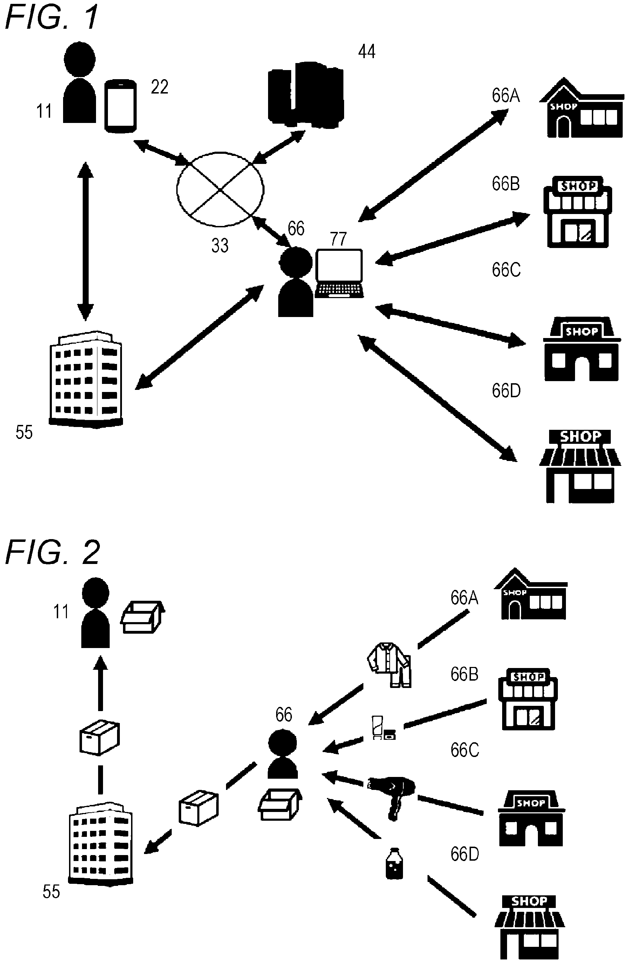

First, the configuration and outline of a travel management system according to one embodiment of the present invention will be described based on Fig. 1. Fig. 1 is a schematic diagram showing an outline configuration example of a travel management system 1 according to the present embodiment.

A traveler 11 operates, in one's own client terminal 22, a travel system application executed by a program of the present invention, thereby transmitting product request information to a network 33. Such information is transmitted to a coordinating facility 66 via a server 44 (including a management server 88). Such a coordinating facility collects a request product and assigns an ID to each traveler for unitary management.

Referring to Fig. 2, the traveler 11 can subsequently receive the product collected by the coordinator facility 66 via an accommodation facility 55 such as a hotel. Fig. 2 shows an example, and the traveler 11 may directly receive the product requested directly from the traveler from the coordinating facility 66. The traveler can also visit to local shops (also referred to as product providing facilities) (66A to 66D) to directly obtain or return the product. The travel system application of the invention of the present application and the management server can cooperate with each other to directly send a request to the shops (66A to 66D) at the place to stay via the Internet (not shown). Similarly, in this case, the product is collected to the coordinating facility from each shop (66A to 66D) to form the package of the request products for the traveler. Alternatively, the product etc. are sent to the place 55 to stay as the accommodation facility to form the package of the request products for the traveler. In this case, the place 55 to stay is meant to include the coordinating facility 66 and a client terminal 77 thereof. Alternatively, the place 55 to stay may be inclusive of the coordinating facility 6 and 77.

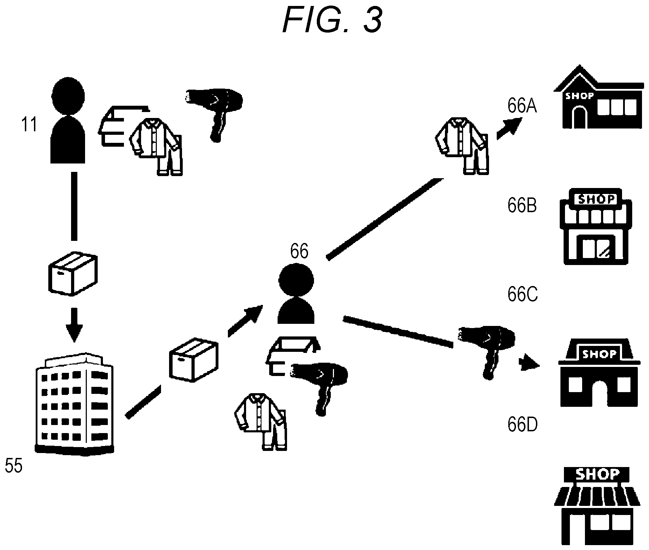

Next, a case where the rental product is returned in the invention of the present application will be described. The traveler 11 can bring and return the rental product to a facility at which the traveler 11 has received the rental product. In one aspect in Fig. 3, return to a facility as the place to stay will be described by way of example. However, at, e.g., the hotel as the place to stay, a home appliance or clothes can be returned in such a manner that the home appliance or the clothes are left at the hotel room after use. This is available in such a manner that the ID of the traveler 11 and the ID of a user of the room link each other.

The returned rental product received by the facility as the place to stay is received by the coordinating facility, and information such as a use history is managed by a coordinate application.

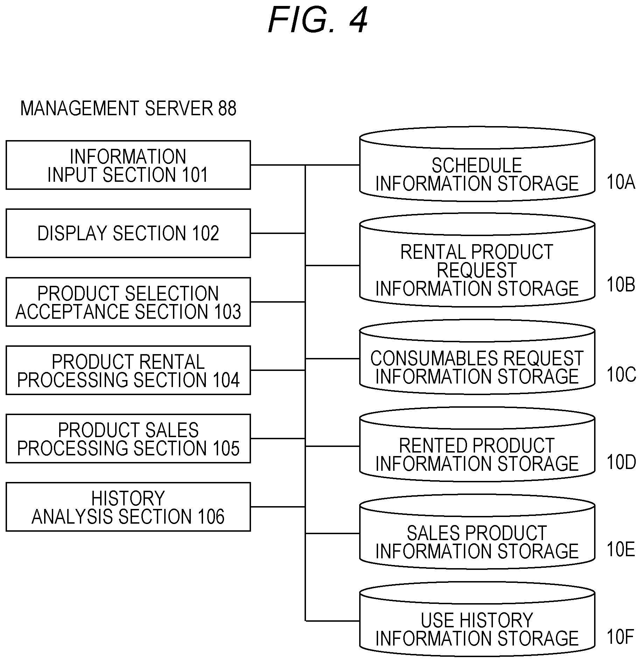

Referring to Fig. 4, the management server 88 includes a configuration for validating the functions of the travel system application of the present invention and the coordinate application.

In the invention of the present application, a communicator (not shown) functions to allow communication of various types of information between the client terminal 22 of the traveler and the coordinating facility via the network 33 of Fig. 1. In the present invention, the communicator sends information from the client terminal to an information input section 101. Such information includes, but not limited to, the attribute of the traveler, information on a product or consumables requested by the traveler, information regarding product collection by the coordinating facility, and information on provision and/or return of these products. In one example shown in Fig. 4, the rental product and the consumables (having the same meaning as that of a sales product) are managed in separate databases (10B and 10D for the rental product, 10C and 10E for the consumables), but may be managed in the same database server. Moreover, the communicator can receive a user request from the client terminal of the traveler as necessary to overwrite information in the database by the information input section 101. Such a request includes, but not limited to, a case where a trip schedule is changed and a case where the duration of stay is extended.

The information input section 101 provides a section configured to input information by the traveler. Such information includes, but not limited to, the attribute of the traveler oneself, the trip schedule, and place-to-stay information. In one embodiment shown in Fig. 2, such information can be saved in a schedule information storage. Important information input by the traveler includes request information on the rental product to be used at the place to stay, such as clothes, a home appliance, and a beauty appliance, and request information on the consumables such as food and a personal care product including a cosmetic and a hair-care product. In the present specification, the personal care product means a product keeping a human skin clean, adjusting one's clothes, or making an appearance beautiful, such as a cosmetic or lavatory goods. A display section 102 is a section forming a user interface for various types of information to be handled by the application of the present invention. A product selection acceptance section 103 is a section configured to confirm the order of the product requested by the traveler to notify such information to the traveler and/or the coordinating facility by the display section 102 and overwrite information in a rental product request information storage 10B. A product rental processing section 104 is a section configured to assign rental information to the rental product. Moreover, in a case where the rented product is returned, the product rental processing section 104 assigns a return history and overwrite the information on the database. A product sellout processing section 105 is a section configured to store information on the consumables (a product which is not necessarily returned) requested by the traveler and provided to the traveler and to transmit the information to a related database for updating.

The storages (10A to 10F) store various types of information regarding management of provision of the product in the travel system of the present invention. The schedule information storage 10A stores the traveler schedule. The rental product request information storage 10B stores information on the product requested from the traveler. The consumables request information storage 10C stores information on the consumables requested from the traveler. The rented product storage 10D stores the rental product rented from the coordinating facility. The sales product storage 10E stores information on the consumables provided from the coordinator facility. The use storage 10F stores, for example, the information in 10A to 10E with such information linking the attribute of the traveler. Such information processing is, for example, implemented by a trip history analysis section 106 of Fig. 2, and the result thereof is stored in 10F. With such data, the traveler can invoke such data by the application according to the invention of the present application and can reuse such data in one's second trip.

The schedule information storage 10A may store not only the trip schedule of the traveler but also a user (traveler) attribute. In this storage, a user ID is assigned to a user. In one embodiment of the invention of the present application, the entire data links the user ID. Thus, by searching with a particular user ID, a history such as a trip schedule history, the history of products rented during a trip, the history of used personal care products, and a food history can be viewed. Moreover, such history information can be invoked and be arranged for use of the system of the present invention. In the present invention, the traveler may be an individual or a group of multiple individuals. For example, a single user ID is assigned to a family so that arrangement of luggage and consumables of members of the family can be made by the program or system of the invention of the present application.

Various storages described above may be provided with information processing functions dedicated to information processors such that various types of information are processed on each occasion by these functions, or may be processed by a relational database engine among databases.

In the present invention, the client terminal (22 and 77 with reference to Fig. 1) has a web browser function. For example, a hyper text transfer protpcal (HTTP) request is transmitted to the management server, and as a response thereto, e.g., a webpage is acquired and is displayed on a screen. By operation of the client terminal (22 and 77 with reference to Fig. 1), the traveler and the coordinator facility can manage the information for implementing the system of the present invention. Note that as the client terminal (22 and 77 with reference to Fig. 1), a desktop computer, a mobile phone, a PAD, etc. are applicable.

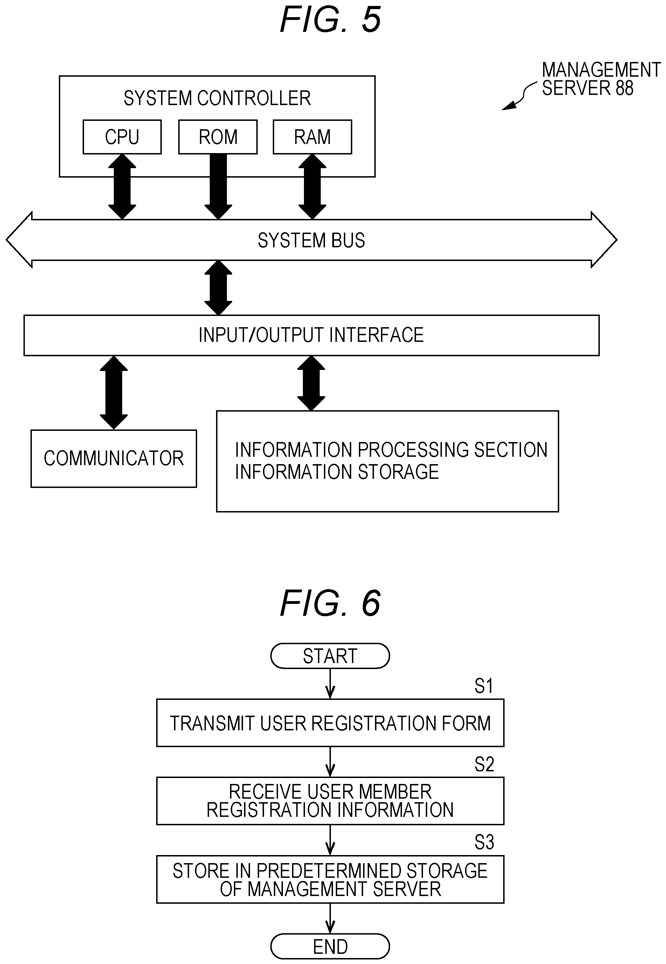

Next, the functions of the management server 88 will be described based on Fig. 5.

As shown in Fig. 5, the management server 88 includes the communicator, an information processing section and an information storage (Fig. 2), an input/output interface, and a system controller. The system controller and the input/output interface are connected to each other via a system bus.

The communicator is connected to the network to control the state of communication with the client terminal (Fig. 1, 22 and 77) and the product providing facilities (each shop 66A to 66D).

The information processing section and the information storage (Fig. 2) include a hard disk drive etc., and include the function of storing, e.g., a written webpage file by various programs such as an operating system and a server program, a markup language such as an HTML, etc.

Moreover, in the information processing section and the information storage (Fig. 4), a user information storage configured to manage the attribute of the traveler, the schedule information storage configured to manage the traveler schedule information, a product information storage configured to store information on a product consumed and/or used by the traveler, an order information storage configured to store a product order from the traveler, and a product collection information storage configured to storage information on a product in the coordinating facility are built, these storages being used for the program of the present invention.

Next, the input/output interface includes a communicator, a read only memory (ROM), a random access memory (RAM), etc. In the system controller, a CPU functions as, e.g., the product rental processing section and/or the product sales processing section configured to read and implement various storages and execution sections stored in the ROM or the information storages to determine whether or not the rental product is available for the traveler during an expected rental period and perform the processing.

Next, one type of operation of a product rental management system according to one embodiment of the present invention will be described based on Figs. 6 to 10.

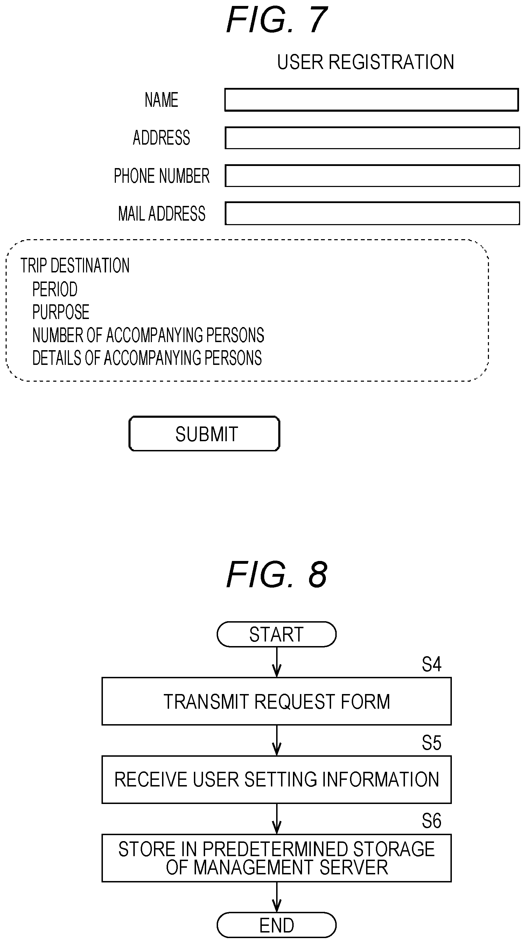

Fig. 6 is a flowchart showing an operation example in user registration in the system of the present invention. Fig. 7 is a schematic view showing one example of a user registration form displayed on the client terminal 22.

First, when receiving, from the client terminal 22, a request for an access to a webpage for user registration, the management server 88 transmits a member registration form as shown in Fig. 7 (Step 1: S1). Specifically, the system controller (Fig. 5) of the management server 88 transmits the data of the user registration form via the communicator (Fig. 5) such that, e.g., the user registration form as shown in Fig. 7 is displayed on the screen of the client terminal 22. The traveler inputs a name, an address, a mail address, etc. and enters a period, a place to stay, a purpose, and an accompanying person, and then, clicks on a confirmation button on a GUI.

Next, the management server 88 receives user registration information (Step 2: S2), and registers such information in a user database or a predetermined storage of the management server (Step 3: S3). Specifically, the management server 88 receives, from the client terminal 22, the data input or selected by the traveler, and using the product selection acceptance section 103, stores such data in the rental product request information storage 10B.

Next, the flow of rental setting in the management server 88 will be described based on Figs. 8, 9, and 10.

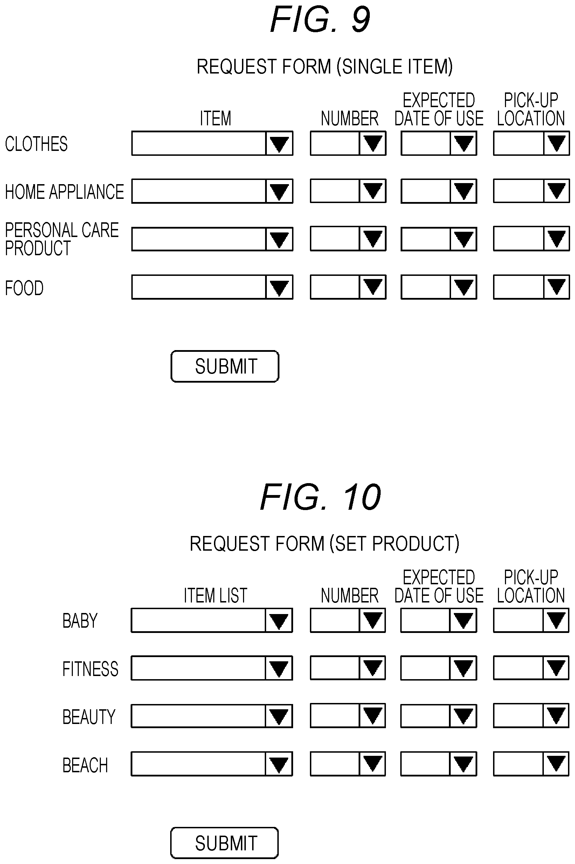

Fig. 8 is a flowchart showing an example of rental setting operation in a product rental management server device. Figs. 9 and 10 are schematic views showing one example of a rental setting form displayed on a user terminal device.

As shown in Fig. 8, the management server 88 transmits, to the client terminal 22, a request form set by the traveler (Step 4: S4). Specifically, the system controller (Fig. 5) of the management server 88 transmits the data of the request form via the communicator (Fig. 5) such that the request form as shown in Figs. 9 and 10 is displayed on the screen of the client terminal 22.

When the traveler specifies and selects specific item, date, and pick-up location of the rental product on the request form 51 and clicks on a submit button of the form, such data is transmitted to the management server 88 via the network. Upon or after user registration, the traveler transmits the request form so that arrangement of the rental product and the consumables can be made at a trip destination.

Next, the management server 88 receives request information (Step 5: S5) and stores such information in a predetermined storage of the management server, e.g., the rental product request information storage (10B) and/or the consumables request information storage (10C) in Fig. 2 (Step S6). Specifically, the management server 88 sorts the data input and selected by the client terminal 22 into, e.g., the rental product request information storage (10B) and/or the consumables request information storage (10C) by the product selection acceptance section 103, and stores such data in each storage.

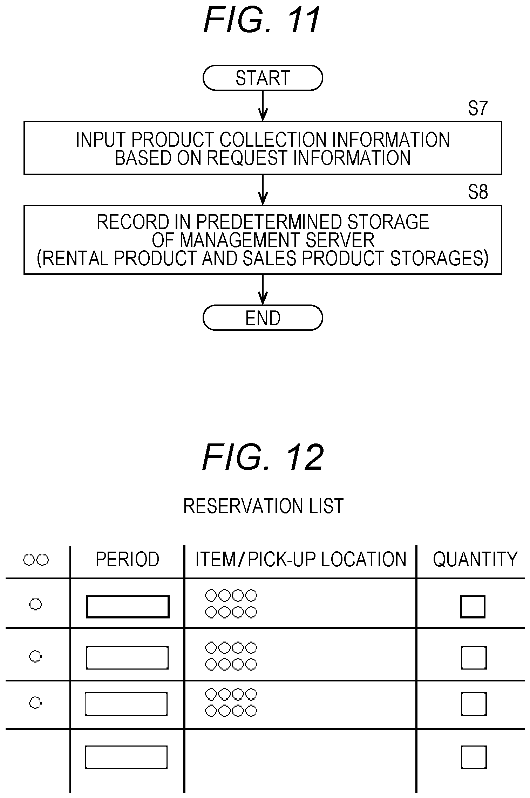

Next, the flow of making arrangement of the rental product and/or the consumables on a coordinator facility side will be described based on Fig. 11. Fig. 11 is a flowchart showing an example of the operation of confirming the reservation of the rental product and/or the consumables by the management server 88.

As shown in Fig. 11, in the client terminal 88 of the coordinating facility, information on the collected product is input based on the request information (Step 7: S7). Specifically, the rental product request information storage 10B and/or the consumables request information storage 10C of the management server 88 are displayed on the client terminal 88 of the coordinating facility, so that a product being already obtained or arranged is checked using a list displayed on the client terminal 88. Such information is transmitted to the management server 88, and accordingly, information on an available product is stored in the rented product storage 10D and the sales product storage 10E via the product rental processing section 104 and the product sales processing section 105 (Step 8: S8). As necessary, the stored product information can be displayed from the rented product storage 10D and the sales product storage 10E via the display section 102 by operation of the client terminal by the traveler. For example, the traveler shows the information displayed on the client terminal as described above to the coordinator facility, the providing facility, or each shop providing the product, thereby picking up the product. The coordinator facility can input the product information according to the request information until a deadline set by the traveler. With this configuration, the traveler can recognize an unprocurable product.

Further, in the invention of the present application, the traveler may set the language of the place to stay in advance or check the position information via the GPS, so that the information can be displayed in the language of the place to stay. For example, the traveler can set, at the beginning of the trip, the displaying function to English for, e.g., one week from the date of the trip schedule during the trip. Moreover, the position information is read from the GPS function of the client terminal of the traveler, so that the information can be displayed in a language (e.g., in Pekingese in the case of a stay at Beijing) at a current location by the travel system application according to the present invention. With such a system, the traveler and the coordinating facility can smoothly exchange the reserved product. Such a function can be added by a plug-in function.

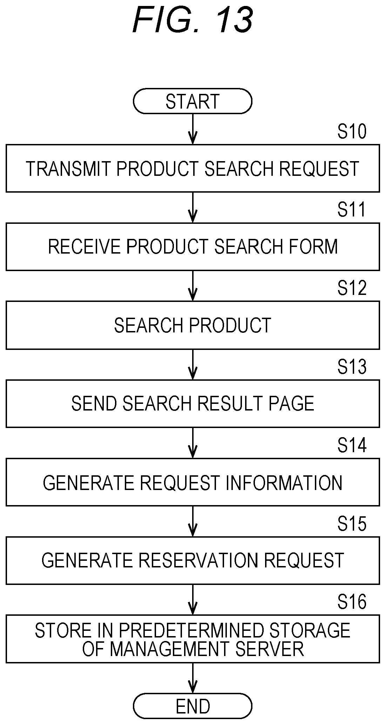

Next, the flow of reservation of the rental product in another aspect of the invention of the present application will be described based on Fig. 13.

Fig. 13 is a flowchart showing an operation example in rental product reservation by the management server 88 in another aspect of the embodiment. The traveler requests, via the client terminal, the management server 88 to send a form for searching the product (Step 10: S10). The client terminal 22 receives and displays the product searing form (Step 11: S11). The traveler searches the product (Step 12: S12). Specifically, when a keyword is input to a searching window and a submit button on the form is clicked or touched, a search condition is sent to the controller of the management server 88, the information from, e.g., the product providing facility accessible to the management server and the keyword are checked against each other to generate a search result, and such a search result is displayed on the client terminal (Step 13: S13). After the traveler views the displayed search result, the request information on the product rental and/or the consumables is generated via the client terminal (Step 14: S14), and a reserved product page is generated (Step 15: S15). The reserved product page is stored in a predetermined storage of the management server (Step 16: S16).

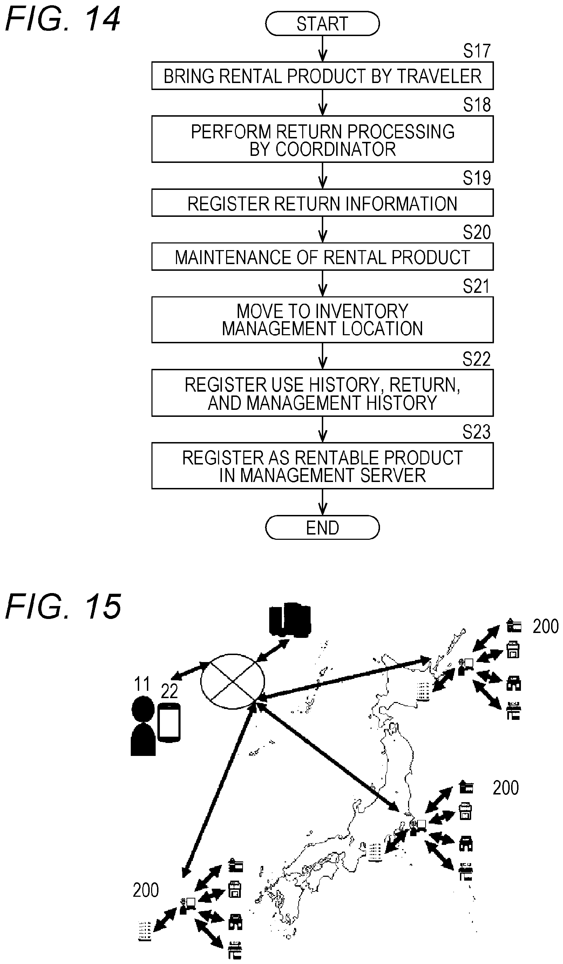

Next, an operation example of one aspect in a case where the traveler returns the rental product will be described with reference to Fig. 14. The traveler brings the rental product to the facility from which the rental product is received (Step 17: S17). Such a rental product is brought to the coordinator, the coordinator performs the return processing via the coordinate application (Step 18: S18), and return information is registered (Step 19: S19). For the rental product subjected to the return information processing, cleaning and/or maintenance are performed (Step 20: S20), and such a rental product is moved to an inventory management location (Step 21: S21). After the rental product is moved to the inventory management location, the coordinating facility stores, as a management history, a return status, a use history, maintenance, a product state, etc. in the use history information storage 10F of Fig. 4 (Step 22: S22). After such information is written, information on movement to the inventory management location becomes available in the rental product request information storage, and other travelers can make an access to such information via the application according to the present invention.

Referring to Fig. 4, the traveler use history information linking the user ID is subsequently stored in a traveler use history storage from the information in the rented product storage 10D and the sales product storage 10E via the traveler history analysis section. From the traveler use history information, the traveler can search information on the same trip destination. The invoked information can be directly used as the request information on the product etc., or the rental request can be changed on the GUI.

Next, another aspect of the invention of the present application will be described with reference to Fig. 15. By the system of the invention of the present application, the traveler can travel with less luggage. That is, the providing facility 55, the coordinating facility 66, the client terminal 77, and the providing facilities 66A to 66D of the product etc. are taken as one functional unit with reference to Fig. 1, so that connection can be made in a communicable and distributable manner (200 in Fig. 15). Such a functional unit is communicably connected to the traveler 11, the terminal 22, the network 33, and the server. By the system of the present invention, such a unit is located at each place so that the traveler can lightly comfortably travel to multiple regions. For example, in a case where a foreign traveler travels to Hokkaido and Okinawa after sightseeing in Tokyo, clothes matching each region can be, by the functional unit 200 on the spot, used on the spot by means of the application according to the present invention. The same also applies to overseas. Even in the case of traveling from Hawaii to Alaska, arrangement is made such that necessary goods such as clothes can be used on the spot.

Next, the unit 200 in Fig. 15 can be built in, e.g., a large cruise ship in the case of long-term cruising in the ship.

In the present invention, the traveler operates the application of the client terminal so that the rented product can be purchased.

### INDUSTRIAL APPLICABILITY

The present invention provides the technique of achieving preparation of the luggage of the traveler at the place to stay. According to the present invention, the traveler may perform only operation of the application executed by the program of the present invention without the need for collecting actual goods. With this configuration, the luggage of the traveler oneself can be reduced. Further, according to the present invention, the traveler overwrites and/or changes the registration information by the application executed by the program of the present invention so that a schedule change can be also handled. Thus, it is extremely advantageous in a case where the traveler travels to regions with different weathers for different purposes for a long period of time. For example, a foreign traveler having visited to Japan can travel to Hokkaido, Tokyo, and Okinawa with the minimum preparation of clothes. As necessary, procurement of local water and food at the place to stay can be reversed at once.

The present invention is not limited to each embodiment described above. Each embodiment is an example, and has the substantially same configuration as that of the technical idea described in the claims of the present invention. Any embodiments providing similar features and advantageous effects are included in the technical scope of the present invention.

### LIST OF REFERENCE SIGNS

- 11:: Traveler
- 22:: Client Terminal of Traveler
- 33:: Network
- 44:: Server
- 55:: Providing Facility (Accommodation Facility)
- 66:: Coordinating Facility
- 77:: Client Terminal of Coordinating Facility
- 66A to 66D:: Product Providing Facility
- 88:: Management Server
- 101:: Information Input Section
- 102:: Display Section
- 103:: Product Selection Acceptance Section
- 104:: Product Rental Processing Section
- 105:: Product Sales Processing Section
- 106:: History Analysis Section
- 10A:: Schedule Information Storage
- 10B:: Rental Product Request Information Storage
- 10C:: Consumables Request Storage
- 10D:: Rented Product Information
- 10E:: Sales Product Storage
- 10F:: Use History Information Storage
- 200:: Functional Unit

## Claims

1. A program for executing a travel system application in a traveler client terminal,
the traveler client terminal being capable of inputting traveler schedule information, rental product and/or consumables request information, and rental product and/or consumables use schedule information,
the program being stored in a management server communicable with the traveler client terminal via the Internet, and
the program causing the management server to execute
a storage step of storing the schedule information, the request information, and the use schedule information transmitted from the traveler client terminal,
a step of producing available rental product and/or consumables information indicated by the transmitted request information based on the stored request information and the stored use schedule information and storing the available rental product and/or consumables information,
a step of displaying the stored available information, and
a step of receiving, from the traveler client terminal, purchase information indicating purchase of a rental product and/or consumables indicated by the stored request information or a corresponding new product after the rental product and/or the consumables is consumed and/or used and the rental product is returned.

2. The program according to claim 1, wherein
the management server further executes a step of collecting position information on the traveler client terminal by a GPS function to transmit, to the traveler client terminal, the information in a language changed to a language linking the position information.

3. The program according to claim 1, wherein
the management server further executes a step of storing rental product return information.

4. The program according to claim 1, wherein
the management server further executes a step of storing, as history information, information on any one or combination of the schedule information, the rental product and/or consumables request information, the use schedule information, position information collected using a GPS function, and rental product return information.

5. The program according to claim 4, wherein
the management server further invokes the history information to transmit the history information as new travel rental information to the traveler client terminal.

6. A travel management system for reserving a rental product and/or consumables and providing the rental product and/or the consumables to a traveler, comprising:
a traveler client terminal including a travel system application executed by the program according to any one of claims 1 to 5;
a client terminal of a coordinating facility; and
a management server,
wherein the client terminal owned by the coordinating facility includes a coordinate application for implementing
a section configured to invoke and display traveler schedule information, rental product and/or consumables request information, and use schedule information transmitted to the management server by the traveler,
a section configured to transmit available rental product and/or consumables information to the management server,
a section configured to transmit, to the management server, information on reception of a rental-ended product from the traveler, and
a section configured to input and update rental product management information.

7. The travel management system according to claim 6, wherein
the rental product and/or the consumables are any one or more or combination of clothes, shoes, bags, a fashion accessory, a home appliance, a cosmetic, a hair and beauty home appliance, hair and beauty equipment, fitness equipment, baby goods, leisure goods, audio-video equipment, information communication equipment, indoor entertainment goods, and food.

8. The travel management system according to claim 6, wherein
the management server includes a database having
a user information storage configured to manage traveler attribute information,
a schedule information storage configured to manage a traveler's trip schedule,
a product information storage configured to store product information, which is transmitted from the traveler client terminal, regarding the rental product and/or the consumables to be consumed and/or used,
an order information storage configured to store the purchase information transmitted from the traveler, and
a product collection information storage configured to store product collection information in the coordinating facility.

9. The travel management system according to claim 6, wherein
the management server further includes a product selection acceptance section configured to share, with the client terminal of the coordinating facility, product information selected by the travel system application and a product rental processing section configured to share, with the travel system application, product collection information in the coordinating facility.

10. The travel management system according to claim 6, further comprising:
a providing facility configured to provide the traveler with the rental product and/or the consumables collected, by the coordinating facility, for the traveler and return the product and/or the consumables to the coordinating facility after use by the traveler.

11. The travel management system according to claim 10, wherein
the coordinating facility and the providing facility are an identical facility.

12. The travel management system according to claim 8, wherein
the database further includes a history storage configured to further store an information history stored in the order information storage, and the management server further includes a preference analysis section configured to analyze a traveler's preference based on the information in the history storage.

13. The travel management system according to claim 6, wherein
the traveler is able to delete and add a selected product as needed.

14. The travel management system according to claim 8, further comprising:
a section configured to invalidate an operation of deleting and adding a product by the traveler based on the information from the schedule information storage.

15. The travel management system according to claim 6, wherein
the travel system application is available in a trip reservation site or a hotel reservation site.
